Europäisches Patentamt

European Patent Office

Office européen des brevets

(11) Publication number: **0 294 550 B1**

(12) **EUROPEAN PATENT SPECIFICATION**

(45) Date of publication of patent specification: **16.01.91**

(51) Int. Cl.⁵: **F 01 D 21/00, F 23 C 11/02, F 02 C 3/20**

(21) Application number: **88105361.5**

(22) Date of filing: **02.04.88**

(54) **Power plant with a blow-off system.**

(30) Priority: **14.04.87 SE 8701557**

(43) Date of publication of application:
**14.12.88 Bulletin 88/50**

(45) Publication of the grant of the patent:
**16.01.91 Bulletin 91/03**

(84) Designated Contracting States:
**DE ES GB**

(56) References cited:
**US-A-4 306 411**
**US-A-4 498 285**

(73) Proprietor: **ABB STAL AB**
**S-612 20 Finspång (SE)**

(72) Inventor: **Hjalmarsson, Lennart**
**Dunderbacksvägen 39B**
**S-612 00 Finspong (SE)**

(74) Representative: **Boecker, Joachim, Dr.-Ing.**
**Rathenauplatz 2-8**
**D-6000 Frankfurt a.M. 1 (DE)**

Courier Press, Leamington Spa, England.

EP 0 294 550 B1

## Description

The invention relates to an energy plant according to the pre-characterising part of Claim 1.

The blow-off system enables rapid pressure reduction in a pressure vessel or combustion chamber containing a hot gas. The invention is particularly intended for a PFBC plant in which fuel is burnt in a fluidized bed of particulate material at a pressure considerably exceeding the atmospheric pressure. The term "PFBC" is formed of the initial letters in the English expression Pressurized Fluidized Bed Combustion. In such a plant a bed vessel and a cleaning plant are enclosed in a pressure vessel. The combustion gases generated in the bed vessel are used to drive a turbine. The turbine drives a compressor which delivers compressed combustion air to the pressure vessel.

In the event of an operational disturbance causing a gas turbine trip, the gas supply to the turbine must be quickly shut off to prevent the turbine from racing. By closing the valve in the hot gas conduit from the bed vessel and in the air conduit to the pressure vessel, the turbine and the compressor are isolated from the bed vessel and the pressure vessel, respectively. At the same time a valve in a by-pass conduit between the compressor and the turbine. At the same time a valve in a by-pass conduit between the compressor and the turbine is opened. To prevent the pressure in the combustion chamber or the pressure vessel to rise too high, means have to be provided to release the hot gases from the combustion chamber or pressure vessel.

EP—A—87 10 0752.2 describes one way of slowly reducing the pressure in a combustion chamber and a pressure vessel in the case of a permanent disturbance.

However, in the case of a serious operational disturbance, it is desirable to have the possibility of rapidly achieving a blow-off of the hot gases in the plant. The high gas temperature of up to about 950°C, causes the blow-off valve to be subjected to great temperature stresses which damage the valves and result in the valves not being tight after closing after a blow-off. US—A—4,498,285 shows a valve arrangement for rapid blow-off of hot combustion gases in which combustion gases from a bed vessel are mixed with air from a surrounding pressure vessel with compressed combustion air upstream of a blow-off valve in the pressure vessel wall or in a blow-off conduit from the pressure vessel. Despite the temperature reduction ahead of the blow-off valve, the temperature stresses are still considerable. Simultaneous opening of two valves, one from the combustion chamber and one from the pressure vessel, involves certain problems.

The invention aims at devising an energy plant with a blow-off system which allows rapid release of the combustion gases from the pressure vessel or combustion chamber without jeopardizing the valve means in the blow-off system.

To achieve this aim the invention suggests energy plant with a blow-off system according to the introductory part of Claim 1, which is characterized by the features of the characterizing part of Claim 1.

Further developments of the invention are characterized by the features of the additional claims.

According to the invention, the energy plant comprises a blow-off device with a heat exchanger upstream of a blow-off valve. This heat exchanger may consist of a container containing heat-absorbing material with such a great total heat-absorbing capacity that the temperature of the gas passing through the valve on the downstream side of the heat exchanger during and particularly at the end of a blow-off operation has been cooled to such a temperature that the valve is not damaged and seals completely after a subsequent closing. The heat capacity is suitably dimensioned such that the temperature of the gas after having passed the heat exchanger is less than 300°C at the end of the blow-off process.

Heat-absorbing materials of different kinds can be used, for example sheets, rods or crushed rock or ore in the form of macadam with such a distribution that, on the one hand, good filling of the heat exchanger container is obtained and, on the other hand, the flow resistance is kept relatively low, thus obtaining a rapid blow-off. The heat exchanger can be provided with a cooler or a ventilating system for cooling the heat-absorbing material if it is considered necessary to rapidly cool down this material after a blow-off.

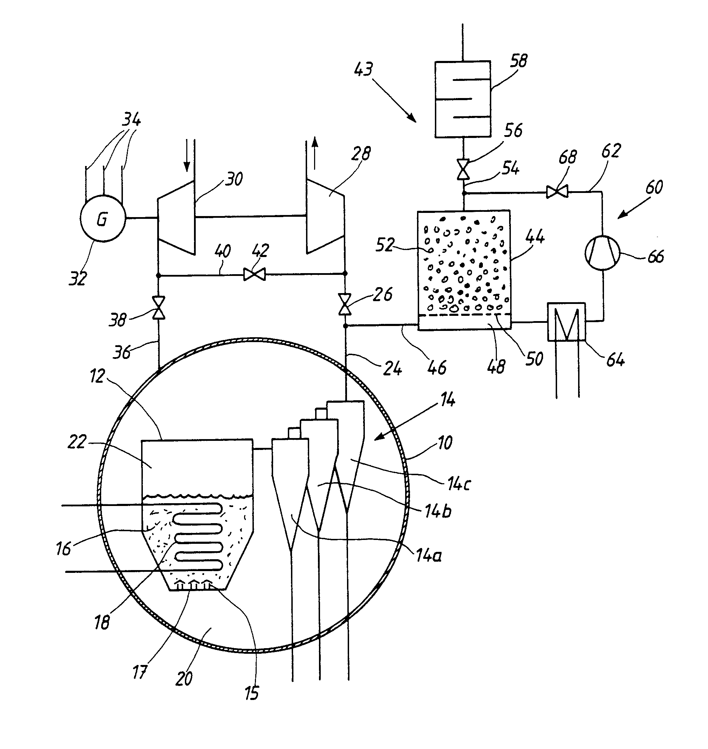

The invention will now be described in greater detail with reference to the accompanying drawing showing — by way of example — in its single figure the invention applied to a PFBC power plant.

In the figure the numeral 10 designates a pressure vessel accommodating a bed vessel 12 and a cleaning plant 14 the latter to clean the combustion gases delivered from the combustion chamber in the bed vessel 12. The cleaning plant 14 is symbolized by three cyclones 14a, 14b, 14c arranged in series. Combustion of a fuel is performed in a fluidized bed 16 of particulate material. The bed 16 accommodates tubes 18 for generating steam to drive a steam turbine (not shown). The space 20 inside the pressure vessel contains compressed combustion air. From the space 20 the bed vessel 12 is supplied with air via the nozzles 15 at the bottom 17 of the bed vessel 12 for fluidization of the bed 16 and combustion of the fuel supplied to the bed 16 by means not shown. Combustion gases from the bed 16 collect in the freeboard 22 and are passed to the cyclones 14a—14c and, after cleaning, further through the conduit 24 with the valve 26 to the turbine 28. The turbine 28 drives a compressor 30 and a generator 32, which is connected to a network 34. Combustion air, compressed in the compressor 30, is led to the space 20 in the pressure vessel 10 through the conduit 36 with the valve 38. A by-pass conduit 40 with a valve 42 is arranged between the conduits 24 and 36.

The plant includes a blow-off system 43 comprising a heat exchanger 44. At its upstream side the heat exchanger 44 is connected by means of the conduit 46 to the conduit 24 which transports the hot combustion gases from the bed vessel 12 to the turbine 28. The conduit 46 opens out into a gas distribution chamber 48 below a perforated bottom 50, which supports a heat-absorbing lump material 52. At its downstream side the heat exchanger 44 is connected to the outlet conduit 54. This conduit 54 includes a valve 56 and a noise suppressor 58.

To the heat exchanger 44 there is connected a coolant circuit 60 with a conduit 62 which is connected to the distribution chamber 48 and the conduit 54, respectively. This coolant circuit 60 comprises a cooler 64, a fan or compressor 66 and a cut-off valve 68. With the aid of the coolant circuit 60, the material 52 in the heat exchanger 44 can be cooled.

In operation, the valves 26 and 38 in the conduits 24 and 36, respectively, are open and valve 56 is shut. Upon a load drop off when disconnecting the generator 32 from the network 34, the energy supply to the turbine 28 must be rapidly reduced to prevent the turbine 28 from accelerating to prohibited speeds. The valves 26 and 38 are closed and the valve 42 in the bypass conduit 40 is opened so as to attain a direct communication between the compressor 30 and the gas turbine 28.

In the event of a permanent fault upon a gas turbine trip or another fault which necessitates putting the plant rapidly out of operation, the hot gases in the plant can be blown off by opening the valve 56 in the conduit 54. Upon the passage of the gases through the heat-absorbing material 52 in the heat exchanger 44, they are cooled down so that the valve 56 will not be subjected to thermal stresses jeopardizing its sealing capability. After a blow-off, the heat exchanger 44 is cooled. The cooling may be performed by the surrounding air. This way of cooling the heat-absorbing material 52 will be slow, which can be accepted in many cases. If rapid cooling is desired, gas can be circulated through the heat-absorbing material 52 and the coolant circuit 60 shown in the figure. For this purpose, the valve 68 will be opened and the fan or compressor 66 will circulate gas through the conduit 62, the heat exchanger 44 and the cooler 64. The cooler 64 can be cooled by air or water.

## Claims

1. Energy plant with a blow-off system comprising a vessel (12) with hot gas at a pressure considerably exceeding the atmospheric pressure and with the blow-off system (43) being arranged for rapid release of hot gas from the vessel (12), characterized in that the blow-off system (43) comprises a heat exchanger (44) which is located between the hot gas vessel (12) and a valve (56) in the blow-off system (43) said heat exchanger (44) containing a lump-formed, rod-formed or plate-formed heat-absorbing material.

2. Energy plant according to Claim 1, characterized in that the heat-absorbing material (52) consists of crushed rock or crushed ore with such a distribution of lump size that the flow resistance in the heat exchanger (44) becomes small.

3. Energy plant according to any of the preceding Claims, characterized in that the lower part of the housing of the heat exchanger (44) is provided with a gas distribution chamber (48) and above this with a perforated bottom (50) which supports said heat-absorbing material (52).

4. Energy plant according to any of the preceding Claims, characterized in that the blow-off system (43) comprises a coolant circuit (60) by means of which gas can be circulated through the heat exchanger (44) for cooling of the heat-absorbing material (52) after a blow-off.

5. Energy plant according to any of the preceding Claims, characterized in that the energy plant is of the PFBC power plant type.

## Patentansprüche

1. Kraftwerksanlage mit einer Abblasvorrichtung, zu welcher ein Gefäß (12) gehört, in welchem sich heißes Gas unter einem erheblich über dem Atmosphärendruck liegenden Druck befindet, und wobei die Abblasvorrichtung (43) zum schnellen Ablassen von heißem Gas aus dem Gefäß (12) vorgesehen ist, dadurch gekennzeichnet, daß zu der Abblasvorrichtung (43) ein Wärmetauscher (44) gehört, welcher zwischen dem Heißgasgefäß (12) und einem Ventil (56) der Abblasvorrichtung (43) angeordnet ist und der klumpenförmiges, stangenförmiges oder plattenförmiges wärmeaufnehmendes Material enthält.

2. Kraftwerksanlage nach Anspruch 1, dadurch gekennzeichnet, daß das wärmeaufnehmendes Material (52) aus zerkleinertem Felsgestein oder zerkleinertem Erz mit einer solchen Klumpengrö-ßen-Verteilung besteht, daß der Strömungswiderstand in dem Wärmeaustauscher (44) klein ist.

3. Kraftwerksanlage nach einem der vorhergehenden Ansprüche, dadurch gekennzeichnet, daß im unteren Teil des Gehäuses des Wärmeaustauschers (44) eine Gasverteilungskammer (48) vorhanden ist, über welcher ein perforierter Boden (50) vorhanden ist, welcher das genannte wärmeaufnehmendes Material (52) trägt.

4. Kraftwerksanlage nach einem der vorhergehenden Ansprüche, dadurch gekennzeichnet, daß zu der Abblasvorrichtung (43) ein Kühlkreis (60) gehört, durch welchen Gas durch den Wärmetauscher (44) zur Kühlung des wärmeaufnehmenden Materials (52) nach dem Abblasen geleitet werden kann.

5. Kraftwerksanlage nach einem der vorhergehenden Ansprüche, dadurch gekennzeichnet, daß die Kraftwerksanlage eine PFBC-Kraftwerksanlage ist.

## Revendications

1. Centrale électrique à système d'évacuation comprenant une cuve (12) avec du gaz chaud sous une pression dépassant considérablement la pression atmosphérique, le système d'évacuation (43) étant agencé pour que le gaz chaud se dégage rapidement de la cuve (12), caractérisée en ce que le système d'évacuation (43) comprend un échangeur de chaleur (44) qui est disposé entre la cuve de gaz chaud (12) et une vanne (56) du système d'évacuation (43), cet échangeur de chaleur (44) contenant un matériau absorbant la chaleur, en vrac, en forme de tige ou en forme de plaque.

2. Centrale électrique suivant la revendication 1, caractérisée en ce que le matériau absorbant la chaleur (52) consiste en roche concassée ou en minerai concassé, avec une répartition de la dimension des morceaux telle que la résistance à l'écoulement dans l'échangeur de chaleur (44) devient faible.

3. Centrale électrique suivant l'une quelconque des revendications précédentes, caractérisée en ce que la partie inférieure de l'enveloppe de l'échangeur de chaleur (44) est munie d'une chambre de répartition des gaz (48) et, au-dessus de celle-ci, d'un fond perforé (50) qui supporte le matériau absorbant la chaleur (52).

4. Centrale électrique suivant l'une quelconque des revendications précédentes, caractérisée en ce que le système d'évacuation (43) comprend un circuit d'agent de refroidissement (60), au moyen duquel du gaz peut circuler dans l'échangeur de chaleur (44) afin de refroidir le matériau absorbant la chaleur (52), après une évacuation.

5. Centrale électrique suivant l'une quelconque des revendications précédentes, caractérisée en ce que la centrale électrique est du type PFBC.